# EUROPÄISCHE PATENTSCHRIFT

(11) **EP 3 141 727 B1**
(45) Veröffentlichungstag und Bekanntmachung des Hinweises auf die Patenterteilung: **27.02.2019**
(21) Anmeldenummer: 16179652.9
(22) Anmeldetag: 15.07.2016
(51) Int. Cl.: F02D 41/06, F02N 19/00, F02D 41/00, F16F 15/131, F02D 35/02

(54) **STARTVERFAHREN FÜR EINE VERBRENNUNGSKRAFTMASCHINE UND KRAFTFAHRZEUG**
STARTING METHOD FOR A COMBUSTION ENGINE AND MOTOR VEHICLE
PROCEDE DE DEMARRAGE POUR UN MOTEUR A COMBUSTION INTERNE ET VEHICULE AUTOMOBILE

(30) Priorität: 25.08.2015 DE 102015216154
(43) Veröffentlichungstag der Anmeldung: 15.03.2017
(73) Patentinhaber: Volkswagen Aktiengesellschaft, 38440 Wolfsburg (DE)
(72) Erfinder: Halfpaap, Josef, 39114 Magdeburg (DE); Fröhlich, Björn, 38518 Gifhorn (DE)

(56) Entgegenhaltungen:
- EP-A1- 2 660 449
- EP-A1- 2 716 898
- EP-A2- 0 819 561
- EP-A2- 1 505 287
- WO-A1-2015/144110
- FR-A1- 2 764 559

## Beschreibung

Die Erfindung betrifft ein Startverfahren für eine Verbrennungskraftmaschine eines Triebstrangs eines Kraftfahrzeugs und ein Kraftfahrzeug, das ein solches Startverfahren ausführt, insbesondere, um mechanische Belastungen eines Schwingungsdämpfungsglieds des Triebstrangs zu verringern.

Bei Kraftfahrzeugen ist es bekannt, im Triebstrang zwischen einer Verbrennungskraftmaschine (im Folgenden auch "VKM" genannt) und einem Getriebe des Kraftfahrzeugs ein Schwingungsdämpfungsglied vorzusehen, wie z.B. ein Schwungrad oder einen Torsionsdämpfer oder dergleichen, um Drehschwingungen aufzunehmen, die von der VKM erzeugt werden. Das Schwungrad ist typischerweise als Zweimassenschwungrad (im Folgenden auch "ZMS" genannt) ausgebildet.

Verbrennungskraftmaschinen erzeugen Schwingungen aufgrund von Gas- und Massenkräften, die zur Anregung von Getriebe- und Antriebswellen-Schwingungen führen können. Solche Schwingungen können durch das oben genannte Schwingungsdämpfungsglied, wie das Zweimassenschwungrad oder den Torsionsdämpfer oder dergleichen gedämpft werden.

Das Zweimassenschwungrad hat typischerweise eine primäre Schwungmasse, die zur VKM hin angeordnet ist, und eine sekundäre Schwungmasse, die zum Getriebe hin angeordnet ist. Die primäre und die sekundäre Schwungmasse sind mit Feder-Dämpfereinheiten miteinander verbunden und dämpfen entstehende Schwingungen im Triebstrang ab.

Der Einsatz eines Zweimassenschwungrades kann die Resonanzfrequenz des Triebstrangs auf Drehzahlen unterhalb der Leerlaufdrehzahl der VKM reduzieren. Diese Maßnahme verbessert das Fahren bei niedrigeren Motordrehzahlen, was den Kraftstoffverbrauch maßgeblich senken kann. Weiterhin kann der Komfort durch Absenken der Geräuschentwicklung im Innenraum steigen. Bei Motorstart wird die Resonanzdrehzahl des Antriebstrangs durchlaufen, was zu hohen Lasten im Zweimassenschwungrad führen kann und es entsprechend belasten kann.

Aus dem Stand der Technik sind zum Schutz des Zweimassenschwungrads mechanische Lösungen bekannt und Lösungen, bei denen (zusätzlich) nicht aus der VKM kommende Energie in das System eingebracht wird, um Resonanzen zu unterdrücken (siehe beispielhaft DE 100 35 521 B4, DE 101 48 175 A1, DE 10 2012 214361 A1).
Eine weitere Gruppe von Lösungen verhindert Resonanzen des ZMS beim Starten der VKM, indem die beiden Schwungmassen des ZMS während des Durchlaufens des Resonanzbereiches mechanisch miteinander verbunden werden (DE 100 05 001 A1, DE 334 55 41 C2, GB 2148455, DE10 2012 203601, DE10 2009 016640, DE10 2005 058531, DE10 2011 084142). Diese Lösungen erfordern ein spezielles ZMS, zusätzliche Vorrichtungen und konstruktive Änderungen am ZMS, die Mehraufwand und Kosten nach sich ziehen.
Aus der europäischen Patentveröffentlichung EP 2 071 163 A2 ist es außerdem bekannt, das ZMS während des laufenden Betriebs einer VKM zu schützen, indem eine Ausgangsleistung der VKM entsprechend angepasst wird, wenn Resonanzen aufzutreten drohen. Nachteilig daran ist, dass ein Schutz des ZMS während einer Startphase der VKM nicht möglich ist und Eingriffe in die Leistungsabgabe des Motors vom Fahrer wahrgenommen werden können.
Aus dem Dokument FR 2 764 559 A1 ist es bekannt, eine Zündung der Verbrennungskraftmaschine während eines Startvorgangs zu unterbrechen, bis eine Resonanzdrehzahl eines Zwei-Massen-Schwungrads überschritten ist. Ein ähnliches Verfahren zeigt auch das Dokument EP 0 819 561 A2. Nachteilig darin ist, dass der Startvorgang verzögert wird.
Ein Startverfahren für einen schnellen Start einer Verbrennungskraftmaschine zeigt das Dokument EP 2 660 449 A1, das sich allerdings nicht mit dem Problem der Resonanz des ZMS beschäftigt.
Aufgabe der vorliegenden Erfindung ist es, ein Startverfahren für eine Verbrennungskraftmaschine eines Triebstrangs eines Kraftfahrzeugs und ein entsprechendes Kraftfahrzeug, das ein solches Startverfahren ausführt, bereitzustellen, was die oben genannten Nachteile wenigstens teilweise überwindet.
Diese Aufgabe wird durch das erfindungsgemäße Startverfahren für eine Verbrennungskraftmaschine eines Triebstrangs eines Kraftfahrzeugs nach Anspruch 1 und ein Kraftfahrzeug nach Anspruch 4 gelöst.

Weitere vorteilhafte Aspekte der Erfindung ergeben sich aus den Unteransprüchen und der folgenden Beschreibung bevorzugter Ausführungsbeispiele der vorliegenden Erfindung.
Wie auch bereits eingangs angedeutet, ist es bekannt, dass während eines Startvorgangs einer Verbrennungskraftmaschine, das sogenannte Zweimassenschwungrad (im Folgenden auch "ZMS" genannt) in eine Resonanzschwingung versetzt werden kann, was das ZMS mechanisch belastet und die Lebensdauer verringern kann.
So wurde zum Beispiel festgestellt, dass es bei einem Dieselmotor während der Startphase Probleme mit der Standfestigkeit des ZMS geben kann. Zum Beispiel können beim Motorstart starke Schwingungen im ZMS zwischen Primär- und Sekundärmasse auftreten, die das Bauteil mechanisch stark belasten können.
Durch eine erhöhte Startanzahl bei aktuellen Start/Stopp-Fahrzeugen, was in naher Zukunft eventuell aus Umweltschutzgründen in vielen Kraftfahrzeugen vorhanden sein wird, kann dieses Problem aufgrund der zunehmenden Starthäufigkeit verschärft werden, da damit auch die mechanische Belastung des Zweimassenschwungrades bzw. allgemein eines Schwingungsdämpfungsglieds zunimmt.

Ferner wurde festgestellt, dass unter bestimmten Bedingungen sich das ZMS derart aufschwingen kann, dass es in seiner Resonanz verbleibt (auch als "Resonanzhänger" bezeichnet), was im Extremfall zum Abbruch des Motorstarts führen kann.

Die Ursache der Schwingung liegt darin, dass der Resonanzbereich des ZMS bei einer Drehzahl weit unterhalb der Leerlaufdrehzahl der Verbrennungskraftmaschine (im Folgenden "VKM" genannt) liegt. Folglich muss und wird der Resonanzbereich des ZMS bzw. allgemein eines Schwingungsdämpfungsglieds beim Start der VKM zwangsläufig durchlaufen.

Anregungen im Bereich der Resonanzdrehzahl des Schwingungsdämpfungsglieds, insbesondere des ZMS, sollen aber aufgrund der oben ausgeführten damit verbundenen Schwierigkeiten vermieden werden, was allerdings wegen der diskreten Anzahl und Anordnung der Zylinder einer VKM typischerweise schwierig bis unmöglich ist.

Um den Durchlauf des Resonanzbereiches des Schwingungsdämpfungsglieds (ZMS, Torsionsdämpfer oder dergleichen) möglichst kurz halten, kann es vorteilhaft sein, den Startvorgang einer Verbrennungskraftmaschine zu verkürzen. Demgegenüber steht jedoch eine begrenzte Leistung des Startersystems die die Startzeit nicht beliebig verringern kann.

Durch Alterung eines Starters der VKM bzw. Alterung einer Batterie kann sich die Startdrehzahl der VKM verringern, wodurch sich die Durchlaufzeit durch den Resonanzbereich eines Schwingungsdämpfungsglieds verlängern kann, was wiederum die Wahrscheinlichkeit für ein Aufschwingen im Resonanzbereich erhöhen kann. Das Aufschwingen kann theoretisch so stark werden, dass der Start der VKM zum Schutz des ZMS abgebrochen werden muss.

Wie oben erwähnt, sind die im Stand der Technik bekannten bautechnischen Maßnahmen nur bedingt dazu geeignet, die Belastungen des Schwingungsdämpfungsglieds während des Startvorgangs zu reduzieren. Außerdem können Schwingungsdämpfungsglieder, die auf ein besseres Startverhalten ausgelegt sind, d. h. ein geringeres Resonanzverhalten aufweisen, empfindlicher sein und daher eine schlechtere Standfestigkeit während des Betriebs der Verbrennungskraftmaschine haben. Daher wird die Auslegung des ZMS bzw. generell des Schwingungsdämpfungsglieds typischerweise zu Gunsten des Fahrbetriebs gewählt.

Die Analyse vieler Startvorgänge durch die Erfinder zeigt, dass es zum Teil schon vor der eigentlichen Verbrennung in der VKM zum Aufschwingen bei einem Schwingungsdämpfungsglied und insbesondere der Sekundärmasse des ZMS kommen kann.

Als Ursache konnten bei manchen Ausführungsbeispielen die Gaskräfte (polytrope Kompression und Expansion der Zylinderfüllung, sozusagen eine "Luftfeder") der VKM identifiziert werden, welche die Drehzahlunförmigkeit einer VKM bei niedrigen Drehzahlen, insbesondere während eines Startvorgangs, verursacht.

Es besteht zudem eine Temperaturabhängigkeit, so dass es bei heißer Verbrennungskraftmaschine bzw. heißem Schwingungsdämpfungsglied, insbesondere heißem ZMS, mit höherer Wahrscheinlichkeit zum Aufschwingen und zu Schädigungen kommt, was insbesondere im Start/Stopp-Betrieb der Fall sein kann. Dieser Umstand lässt sich mit reduzierter Reibung innerhalb der VKM und des ZMS begründen, da sich die Viskosität der Schmiermittel bei Betriebstemperatur verringern.

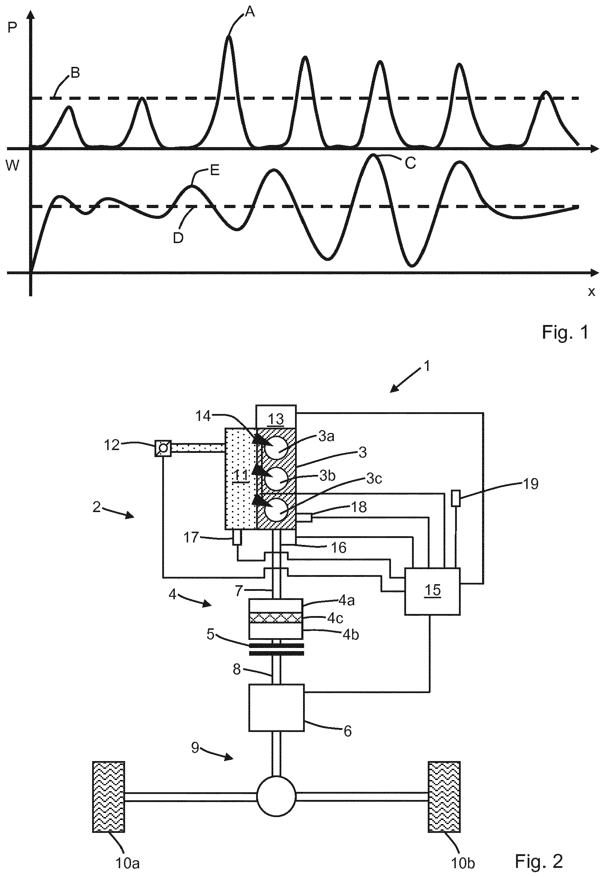

Das Phänomen des Aufschwingens wird im Folgenden rein beispielhaft anhand einer schematischen Darstellung im Rahmen der Fig. 1 erläutert.

Fig. 1 veranschaulicht rein schematisch einen Zylinderdruckverlauf eines Zylinders einer VKM (oben in Fig. 1, Ordinate Druck "P", Abszisse Motorposition "x") und einen Winkelverlauf (unten in Fig. 1, Ordinate Winkel "W", Abszisse Motorposition "x") zwischen einer Primär- und einer Sekundärmasse eines ZMS während eines Starts der VKM, wie es im Stand der Technik vorkommen kann. Der Zylinderdruckverlauf veranschaulicht das Einsetzen der Verbrennung mit dem Druckmaximum A bei der dritten Kompression. Die eingezeichnete Linie B zeigt den Zylinderdruck der sich bei Normalbedingungen ohne Verbrennung im oberen Totpunkt "OT" des Zylinders einstellt.

Nach einer kurzen Anfangsphase ist der Verdreh-Winkel zwischen der Primär- und Sekundärmasse (unten in Fig. 1 dargestellt) des ZMS nahe dem Nullwert, der durch die Linie D dargestellt ist. Durch die Unförmigkeit der Drehung der VKM beginnen sich die Massen im ZMS gegeneinander zu verschieben was schon vor Einsetzen der Verbrennung A anhand der Darstellung bei dem Bezugszeichen E sichtbar wird. Im weiteren Verlauf wird eine Resonanz des ZMS angeregt, was sich in dem Winkelverlauf durch weitere Erhöhung der Amplituden und entsprechende Spitzen zeigt, wobei ein Resonanzmaximum bei dem Bezugszeichen C auftritt. Hier kann es passieren, dass sich die Massen des ZMS derart verschieben bzw. zueinander verdrehen, dass es zu einem Anschlagen im ZMS kommt, was das Federelement, z. B. eine Bogenfeder, des ZMS nach den Lösungen im Stand der Technik mechanisch stark belasten kann.

Weiterhin wurde erkannt, dass im Stand der Technik ein sogenanntes "Anstellschlagen" vorkommen kann, bei dem die VKM während ihres Startvorgangs innerhalb einer Motorlagerung bzw. Pendelstütze an die Anschläge läuft. Dadurch kann es zu merklichen Kraftfahrzeugbewegungen je nach Einbaulage des Motors in Längs- oder Querrichtung und zu einer störenden Geräuschentwicklung kommen.

Auch hier ist die Bauteilauslegung der Aufhängung im Stand der Technik typischerweise ein Kompromiss zwischen Komfort und Lebensdauer.

Die Erfinder haben nun erkannt, dass sich den obigen Problemen begegnen lässt, indem während des Startvorgangs einer Verbrennungskraftmaschine die Füllung der Zylinder der VKM mit Verbrennungsluft reduziert wird.

Dementsprechend betreffen manche Ausführungsbeispiele ein Startverfahren für eine Verbrennungskraftmaschine eines Triebstrangs eines Kraftfahrzeugs bzw. ein solches Kraftfahrzeug mit einer Steuerung (Mikroprozessor, z.B. Motorsteuergerät oder dergleichen), die das Verfahren ausführen kann. Die Verbrennungskraftmaschine weist wenigstens einen Zylinder auf. Der Triebstrang weist die Verbrennungskraftmaschine, ein Getriebe und ein Schwingungsdämpfungsglied auf, welches zwischen der Verbrennungskraftmaschine und dem Getriebe gekoppelt ist. Das Verfahren umfasst:
Erkennen einer Startanforderung an die Verbrennungskraftmaschine;
Reduzieren einer Verbrennungsluftfüllung des wenigstens einen Zylinders der Verbrennungskraftmaschine;
Drehen der Verbrennungskraftmaschine für eine vorgegebene Anzahl von Umdrehungen; und
Erhöhen der Verbrennungsluftfüllung des wenigstens einen Zylinders der Verbrennungskraftmaschine

Wie oben erwähnt kann das Schwingungsdämpfungsglied ein ZMS, ein Torsionsdämpfungsglied oder dergleichen sein. Das ZMS hat typischerweise, wie eingangs erwähnt, eine Primärmasse, die über ein oder mehrere Feder-Dämpfungsglieder mit einer Sekundärmasse gekoppelt ist. Die Primärmasse ist auf der Verbrennungskraftmaschinenseite vorgesehen und die Sekundärmasse auf der Getriebeseite.

Die Startanforderung an die Verbrennungskraftmaschine kann auf verschiedene Art und Weise erkannt werden. Zum Beispiel kann erkannt werden, wenn ein Nutzer den Zündschlüssel bzw.

Zündschloss, einen Startknopf oder dergleichen zum Starten der Verbrennungskraftmaschine betätigt. Auch kann ein anderes Ereignis erkannt werden, welches zum Start der Verbrennungskraftmaschine führen kann, insbesondere bei Start-Stopp Ausführungen eines Kraftfahrzeugs. Ein solches Ereignis kann die Betätigung der Kupplung sein oder die Betätigung eines Gaspedals oder aber auch ein Startsignal welches bspw. von einem Energiemanagementsystem kommt und zum Start der Verbrennungskraftmaschine führt, damit diese elektrische Energie durch Antreiben bspw. eines Generators erzeugt.

Die Verbrennungskraftmaschine kann grundsätzlich jede Art von Motor mit innerer Verbrennung sein, wie einem Ottomotor oder Dieselmotor oder dergleichen und sie kann eine beliebige Anzahl von Zylindern haben.

Hat die VKM mehr als einen Zylinder, so kann die Verbrennungsluftfüllung eines jeden Zylinders der VKM reduziert werden.

Die Reduzierung der Verbrennungsluftfüllung kann grundsätzlich auf verschiedene Arten geschehen und mit unterschiedlichen Mitteln. Zum einen kann die Verbrennungsluftfüllung durch Drosseln der Verbrennungsluftzufuhr reduziert werden und zum anderen kann bspw. Verbrennungsluft aus dem Zylinder durch entsprechendes Öffnen eines Auslassventils ausgelassen werden und dadurch die Verbrennungsluftfüllung des zugehörigen Zylinders verringert werden. Wird die Verbrennungsluftzufuhr gedrosselt, entsteht durch die Drehung der Verbrennungskraftmaschine ein Unterdruck in dem Luftansaugtrakt (Saugrohr oder dergleichen) der VKM, der dazu führt, dass sich die Luftfüllung in dem wenigstens einen Zylinder reduziert.

Bei manchen Ausführungsbeispielen werden bereits vorhandene Mittel eingesetzt, um die Verbrennungsluftfüllung während des Startvorgangs zu reduzieren. Durch das Einsetzen bereits vorhandener Mittel zur Reduktion der Verbrennungsluftfüllung ist das Startverfahren bei manchen Ausführungsbeispielen einfach nachrüstbar, nämlich zum Beispiel durch ein entsprechendes Software-Update eines Motorsteuergeräts oder dergleichen.

Solche Mittel können bspw. eine Abstellklappe, eine Drosselklappe, einen variablen Ventilhub, einen variablen Ventiltrieb, einen Unterdruckspeicher und/oder wenigstens ein oder mehrere Auslassventile des wenigstens einen Zylinders aufweisen.

Die Drosselklappe ist typischerweise in einem Ansaugweg der Verbrennungskraftmaschine angeordnet und ist in vielen bekannten Kraftfahrzeugen standardmäßig vorgesehen und kann entsprechend angesteuert werden, sodass für die Implementierung der vorliegenden Erfindung nur eine Anpassung an der entsprechenden Software bspw. im Motorsteuergerät vorgenommen werden muss.

Der Unterdruckspeicher kann bspw. von einem Bremssystem des Kraftfahrzeugs stammen und die Drosselung der Verbrennungsluftzufuhr unterstützen.

Sind Auslassventile vorgesehen, so kann anstatt des Evakuierens der Zylinder durch Drosselung der Verbrennungsluftzufuhr auch eine Dekompression der Zylinder über Öffnen der Auslassventile vorgenommen werden, um die Verbrennungsluftfüllung in dem wenigstens einen Zylinder zu reduzieren. In beiden Fällen wird die Füllung reduziert. Dazu sind jedoch ebenfalls ein variabler Ventiltrieb und/oder ein zusätzlicher Stellantrieb erforderlich. Bei manchen Ausführungsbeispielen ist die Dekompression über die Auslassventile bereits standardmäßig vorgesehen, z. B. bei großvolumigen Einzylinder-Motorradmotoren oder Flugzeugmotoren. Auch hier wäre das vorliegende Startverfahren einfach nachrüstbar, bspw. durch ein Software-Update des Motorsteuergeräts. Bei manchen Ausführungsbeispielen sind Dieselmotoren, die hohe Verbrennungsdrücke benötigen, entsprechend für die Dekompression angepasst, in dem bspw. ein entsprechendes Stell-System für die Dekompression vorgesehen ist.

Variable Ventilantriebe sind typischerweise aufwendige und teure mechanische Lösungen. Eine Phasenverstellung der Nockenwelle, die ebenfalls bei manchen Ausführungsbeispielen Anwendung findet, ist so ausgestaltet, dass in einem weiten Bereich die entsprechende Reduzierung der Verbrennungsluftfüllung möglich wird.

Bei manchen Ausführungsbeispielen ist allerdings ein variabler Ventilhub bereits so ausgestaltet, dass er zum Evakuieren des wenigstens einen Zylinders benutzt werden kann, weswegen das vorliegende Startverfahren in solchen Fällen einfach nachrüstbar ist.

Die genannten Mittel können einzeln oder in Kombination miteinander eingesetzt werden.

Bei manchen Ausführungsbeispielen ist außerdem die Verbrennungskraftmaschine bereits dazu ausgelegt, auch mit geringem Füllungszustand ihrer Zylinder zu starten. Bei Ottomotoren und insbesondere Dieselmotoren ist es bekannt, den Motor so auszugestalten, dass er auch bei ungünstigen äußeren Umweltbedingungen, wie bspw. einem geringen Umgebungsluftdruck wie er in größeren Höhen ab bspw. ca. 3.000 Metern vorkommt, zuverlässig zu starten und zu funktionieren. Aus dem physikalischen Funktionsprinzip heraus benötigt der Dieselmotor bei manchen Ausführungsbeispielen eine größtmögliche Zylinderfüllung während des Starts, um die Verdichtungsendtemperatur (Selbstzündungstemperatur) für Dieselkraftstoff zu erreichen. Daher ist eine Füllungsreduzierung für den Start eher kontraproduktiv. Dennoch ist es bei manchen Ausführungsbeispielen möglich, die Füllung auf ein sowohl für den eigentlichen Motorstart als auch für den beschriebenen Schutz des Schwingungsdämpfungsglied geeignetes Niveau abzusenken, z. B. auf ein Niveau entsprechend der Umweltbedingungen bei 4.000 m über NN, da auch bekannte Verbrennungskraftmaschinen und Dieselmotoren so ausgestaltet sind, dass sie in dieser Höhe problemlos starten.

Da die Reduzierung der Verbrennungsluftfüllung des wenigstens einen Zylinders vor bzw. während des Drehens (Startens) der Verbrennungskraftmaschine stattfindet, wird folglich die Verbrennungskraftmaschine mit reduzierter Verbrennungsluftfüllung gedreht bzw. gestartet.

Dadurch wird das von der VKM erzeugte (Brems-)Drehmoment verringert, da weniger Verbrennungsluft in dem jeweiligen Zylinder für die Verdichtung vorhanden ist, die vom Startersystem für den VKM-Start komprimiert werden muss. Dadurch wird wiederum der Drehzahlgradient, mit dem die Gasfüllung (Luftfeder) die VKM sowohl in positiver Drehzahlrichtung nach dem oberen Totpunkt "OT" als auch in negativer Drehzahlrichtung vor dem OT, verringert. Typischerweise würde ohne Reduzierung der Luftfüllung der Zylinder durch die Verdichtungsarbeit und einsetzende Verbrennung die Drehung der Verbrennungskraftmaschine stark beschleunigt, das heißt die Verbrennungskraftmaschine hätte einen hohen Drehzahlgradienten. Diese hohe Beschleunigung führt aber aufgrund der dem Schwingungsdämpfungsglied innewohnenden Massenträgheit dazu, dass die kinetische Energie bspw. zunächst als Verformungsenergie in einem elastischen Element des Schwingungsdämpfungsglieds gespeichert wird. Zum Beispiel wird bei einem ZMS zunächst die Primärmasse aufgrund der Drehung der Verbrennungskraftmaschine gedreht und die Feder-Dämpfungsglieder werden verformt, bevor die Sekundärmasse entsprechend gedreht und beschleunigt wird. Wird der Drehzahlgradient entsprechend geringer, reduziert sich damit der Energieeintrag in die Sekundärmasse, wodurch insbesondere das Aufschwingen im Resonanzbereich verringert oder sogar verhindert werden kann. Das vorliegende Verfahren kann an die Schwingungseigenschaften des Dämpfungsgliedes in der Art angepasst werden, dass bei Durchlaufen des Resonanzdrehzahlbereichs die Anregung bzw. der Energieeintrag auf ein Minimum reduziert wird.

Zum Drehen der Verbrennungskraftmaschine kann bspw. ein (elektrischer) Starter, wie er für Kraftfahrzeuge und Verbrennungskraftmaschinen bekannt ist, vorgesehen sein. Typischerweise ist eine Anzahl von Umdrehungen der Verbrennungskraftmaschine vorgegeben, um die Verbrennungskraftmaschine zu starten.

Während die VKM bspw. durch den Starter gedreht wird, wobei sich die Verbrennungsluftfüllung durch das Verfahren reduziert (wie oben beschrieben), erhöht sich die Drehzahl durch einsetzen von Verbrennungen. Wenn die Drehzahl über einer Schwelle oder die VKM eine gewisse Position erreicht hat, wird die Verbrennungsluftfüllung wieder erhöht bspw. auf einen vorgegebenen (Normal-)Sollwert. Die Erhöhung geschieht durch Einstellen des entsprechenden Mittels, d.h. der Drosselklappe, des variablen Ventilhubs, etc., wie oben erwähnt.

Durch die Erhöhung der Verbrennungsluftfüllung gelangt die VKM in ihren normalen Betriebsmodus und ihr Startvorgang kann abgeschlossen werden.

Durch den füllungsreduzierten Start der VKM und dem damit verbundenen weicheren Hochlauf der VKM wird nicht nur die mechanische Belastung des Schwingungsdämpfungsglieds, sondern auch der gesamten Aufhängung der VKM verringert, da die Bewegung der VKM in der Aufhängung verringert werden kann. Dadurch steigt bei manchen Ausführungsbeispielen der Komfort beim Start der VKM und es können evtl. Bauteilkosten bei der Auslegung der Aufhängung eingespart werden.

Die vorliegenden Ausführungsbeispiele können als rein softwarebasiertes Verfahren und somit unabhängig von spezieller Hardware realisiert sein und bspw. einfach in vorhandene Software eines Motorsteuergeräts integrierbar sein. Sie können für jede Art VKM angewendet werden, bei der eine Vorrichtung zur Reduzierung der Verbrennungsluftfüllung ihrer Zylinder vorgesehen ist. Da dies, wie ausgeführt, bei bekannten VKM der Fall ist, können vorhandene Kraftfahrzeuge entsprechend einfach, bspw. durch Update einer Motorsteuergerätsoftware, nachgerüstet werden. Die vorliegende Erfindung ist außerdem sowohl für selbst- als auch fremdgezündete VKM, insbesondere Otto- und Dieselmotoren, anwendbar, sowie für Hybridantriebe mit VKM. Da manche Ausführungsbeispiele einfach in eine vorhandene Software eines Motorsteuergeräts eines bereits existierenden Kraftfahrzeugs integrierbar sind, kann der Absicherungs- und Applikationsaufwand gering sein und eine separate Bauteilprüfung unnötig sein.

Bei manchen Ausführungsbeispielen hängt die Reduktion der Verbrennungsluftfüllung von einem Umgebungsluftdruck und/oder einer Betriebstemperatur der Verbrennungskraftmaschine ab. Dadurch kann die Reduktion der Verbrennungsluftfüllung einerseits hinsichtlich der Vermeidung von Resonanzen optimiert werden und andererseits sichergestellt werden, dass die Reduktion der Verbrennungsluftfüllung nicht so weit geht, dass (ungeplant) keine Verbrennung stattfindet.

Bei manchen Ausführungsbeispielen wird das Erhöhen der Verbrennungsluftfüllung in Abhängigkeit eines oder mehrerer Betriebsparameter der Verbrennungskraftmaschine ausgeführt. Dadurch ist es möglich, den Betrieb der Verbrennungskraftmaschine einerseits hinsichtlich auftretender Resonanzen zu optimieren und andererseits hinsichtlich eines schnellen Ansprechens und Startens der Verbrennungskraftmaschine zu optimieren.

Betriebsparameter repräsentieren bspw. den Verbrennungsluftdruck im Zylinder, eine Anzahl von Leerkompressionen eines Zylinders (d. h. Kompressionen mit reduzierter Verbrennungsluftfüllung) und/oder die Anzahl von Umdrehungen der VKM.

Zur Ermittlung der Betriebsparameter kann bspw. ein Temperatursensor zum Ermitteln einer Betriebstemperatur der Verbrennungskraftmaschine, ein Umgebungsluftdrucksensor, ein Saugrohrdrucksensor und/oder ein Verbrennungskraftmaschinenpositionssensor vorgesehen sein bzw. das Kraftfahrzeug kann entsprechende Sensoren aufweisen.

So kann bspw. die Temperaturabhängigkeit des Aufschwingverhaltens des Schwingungsdämpfungsglieds bei manchen Ausführungsbeispielen berücksichtigt werden. Ein Aufschwingen des Schwingungsdämpfungsglieds ist tendenziell eher bei warmer VKM zu erwarten, da die betriebswarme VKM und das betriebswarme Schwingungsdämpfungsglied gegenüber dem kalten Zustand weniger dämpfende Reibung aufweist. Gleiches gilt natürlich auch für eine entsprechende hohe Umgebungstemperatur, die die VKM bzw. das Schwingungsdämpfungsglied ebenfalls annimmt. Solche Temperaturen können entsprechend mit Temperatursensoren, die z. B. die Temperatur der VKM oder der Umgebung messen, ermittelt werden.

Außerdem kann bei warmen Brennraum die Verbrennungsluftfüllung im Zylinder (Zylinderfüllung) weiter reduziert werden, da es zu weniger Temperaturverlusten bei Erreichen der Selbstzündungsbedingungen der VKM (z. B. beim Dieselmotor) kommen kann.

Bei geringen Temperaturen der VKM bzw. Schwingungsdämpfungsglied kann die Zylinderluftfüllung und die Kraftstoffeinspritzmenge erhöht werden, bis hin zur kompletten Deaktivierung der Funktion der Reduktion der Verbrennungsluftfüllung, wenn die Temperatur unterhalb einer vorgegebenen Grenztemperaturschwelle liegt.

Dementsprechend ist bei manchen Ausführungsbeispielen das Startverfahren nur im Bedarfsfall im Eingriff.

Bei manchen Ausführungsbeispielen sind als Sensoren wenigstens ein Kühlmitteltemperatursensor und ein Umgebungsluftdrucksensor vorgesehen, um die Reduktion der Verbrennungsluftfüllung des wenigstens einen Zylinders so einzustellen, dass unter allen Bedingungen ein sicherer Start der VKM gewährleistet ist. Gleichermaßen kann der Saugrohrdrucksensor dazu verwendet werden, den Druck im Saugrohr zu ermitteln und entsprechend einzustellen.

Bei manchen Ausführungsbeispielen kann durch Einsatz einer Glühanlage, wie sie für Dieselmotoren bekannt ist, der nutzbare Bereich für den füllungsreduzierten Start der Verbrennungskraftmaschine erhöht werden.

Bei manchen Ausführungsbeispielen wird, während die Verbrennungsluftfüllung reduziert ist und die Verbrennungskraftmaschine gedreht wird, für einen ersten Arbeitstakt der Verbrennungskraftmaschine Kraftstoff zugeführt und für einen darauffolgenden Arbeitstakt der Verbrennungskraftmaschine kein Kraftstoff oder eine geringe Kraftstoffmenge zugeführt. Das heißt, die Kraftstoffzufuhr wird für einen oder mehrere bestimmte Arbeitstakte der Verbrennungskraftmaschine für einen, mehrere oder alle Zylinder der Verbrennungskraftmaschine abgeschaltet, um einen Verbrennungsaussetzer zu provozieren bzw. eine kleinere Verbrennung mit entsprechend geringerem Drehmoment der Verbrennungskraftmaschine zu erzeugen. Der Effekt des Verbrennungsaussetzers bzw. der Verringerung der Kraftstoffzufuhr kann von der Bauart der Verbrennungskraftmaschine und/oder von dem Schwingungsdämpfungsglied abhängen.

Generell wurde erkannt, dass ein weiterer Energieeintrag im Resonanzbereich des Schwingungsdämpfungsglieds eine Erhöhung der Amplituden zur Folge hat. Durch die reduzierte Energieeinbringung in diesem Arbeitstakt, d. h. durch Verringerung oder Abschalten der Kraftstoffzufuhr, kann es zu einer Phasenänderung im Schwingungsdämpfungsglied, insbesondere im ZMS, kommen, was dem Aufschwingvorgang des ZMS entgegenwirkt. Die in das System von der Verbrennungskraftmaschine während des Starts eingebrachte kinetische Energie pendelt bei manchen Ausführungsbeispielen im Resonanzbereich zwischen dem Federmassesystem der Primär- und Sekundärseite des Zweimassenschwungrads hin und her und wird bei der Phasenänderung an die Primärseite (und somit effektiv an die Verbrennungskraftmaschine) abgegeben, was zu einer Erhöhung der Drehzahl und letztendlich zum Motorstart führt.

Das beschriebene Startverfahren kann zur Komfortverbesserung durch Reduzierung des Anstellschlagens der VKM während des Startvorgangs benutzt werden.

Das oben beschriebene Verfahren kann auch als Software implementiert sein, die bspw. auf einem Datenträger gespeichert ist oder als Datenstrom über ein Netzwerk zur Verfügung gestellt wird, wobei die Software Instruktionen enthält, die einen Prozessor veranlassen, das hierin beschriebene Verfahren auszuführen.

Ausführungsbeispiele der Erfindung werden nun beispielhaft und unter Bezugnahme auf die beigefügte Zeichnung beschrieben, in der:
Fig. 1 schematisch einen Zylinderdruckverlauf eines Dieselmotors und den Winkelverlauf zwischen Primär- und Sekundärmasse eines Zweimassenschwungrads darstellt, um das Aufschwingen des Zweimassenschwungrads zu veranschaulichen;
Fig. 2 schematisch ein Ausführungsbeispiel eines Kraftfahrzeugs darstellt;
Fig. 3 schematisch einen Zylinderdruckverlauf eines Dieselmotors und den Winkelverlauf zwischen Primär- und Sekundärmasse eines Zweimassenschwungrads darstellt, um die Wirkung der vorliegenden Erfindung zu veranschaulichen; und
Fig. 4 schematisch ein Ablaufschema eines Ausführungsbeispiels eines Startverfahrens zeigt.

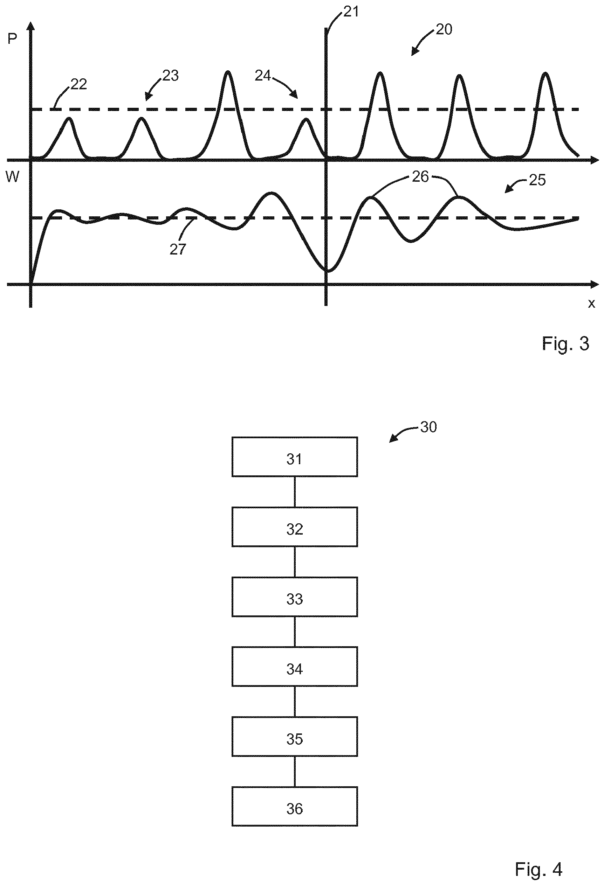

Fig. 2 veranschaulicht ein Ausführungsbeispiel eines Kraftahrzeugs 1 mit einer Steuerung 15, die dazu eingerichtet ist, ein Startverfahren, wie in Fig. 4 veranschaulicht, auszuführen. Dazu hat die Steuerung 15 einen Mikroprozessor und einen Speicher (nicht gezeigt).

Das Kraftfahrzeug 1 hat einen Triebstrang 2, in dem eine Verbrennungskraftmaschine 3, ein Zweimassenschwungrad 4, eine Kupplung 5 und ein Getriebe 6 miteinander gekoppelt sind.

Die Verbrennungskraftmaschine 3 ist hier als Dieselmotor mit drei Zylindern 3a, 3b und 3c ausgestaltet und verfügt über eine Kraftstoffeinspritzung 14, die mit der Steuerung 15 über eine Verbindungsleitung verbunden ist. An der Verbrennungskraftmaschine ist ein Saugrohr 11 angeordnet, durch welches den Zylindern 3a-c Verbrennungsluft zugeführt wird. Auf der Eingangsseite des Saugrohrs 11 ist eine Drosselklappe 12 vorgesehen, die ebenfalls mit der Steuerung 15 verbunden ist und entsprechend von der Steuerung 15 gesteuert werden kann. Außerdem ist ein Starter 13 zum Starten bzw. Drehen der Verbrennungskraftmaschine 3 vorgesehen, der ebenfalls mit der Steuerung 15 verbunden ist.

Das Zweimassenschwungrad 4 hat ein Primärschwungrad 4a, das die primäre Masse bildet und zur Verbrennungskraftmaschine 3 hin angeordnet ist und ein Sekundärschwungrad 4b, das die sekundäre Masse bildet und zur Kupplung 5 und dem Getriebe 6 hin angeordnet ist. Das Primärschwungrad 4a und das Sekundärschwungrad 4b sind über ein Federelement 4c mechanisch miteinander gekoppelt, sodass Schwingungen, die im Triebstrang 2 auftreten, von dem Zweimassenschwungrad 4 aufgenommen werden.

Das Primärschwungrad 4a ist mit einer Kurbelwelle 7 der Verbrennungskraftmaschine 3 gekoppelt und das Sekundärschwungrad 4b ist über eine Welle mit der Kupplung 5 gekoppelt. Die Kupplung 5 ist wiederum über eine Getriebeeingangswelle 8 mit dem Getriebe 6 gekoppelt. Das Getriebe 6 ist an seiner Ausgangsseite über eine Antriebswelle 9 mit zwei Antriebsrädern 10a und 10b gekoppelt. Das Zweimassenschwungrad 4 ist zwischen der Verbrennungskraftmaschine 3 und dem restlichen Triebstrang 2 angeordnet, der aus Kupplung 5, Getriebe 6 und Antriebsrädern 10a und 10b mit den zugehörigen Wellen, nämlich der Getriebeeingangswelle 8 und der Antriebswelle 9 und weiteren nicht erklärten bzw. dargestellten Teilen des Triebstranges 2 gebildet ist.

Zur Messung der Position der Verbrennungskraftmaschine 3 ist in entsprechender Motorpositionssensor 16 vorgesehen, zur Messung des Saugrohrdrucks ein Saugrohrdrucksensor 17, zur Messung der (Betriebs-)Temperatur der Verbrennungskraftmaschine 3 ein Temperatursensor 18 und zur Messung des Umgebungsluftdrucks ist ein Umgebungsdrucksensor 19 vorgesehen, wobei alle Sensoren, 16-19 mit der Steuerung 15 verbunden sind.

Die Steuerung 15 ist hier zwar als einzelne Steuerung dargestellt, dies ist allerdings rein schematisch zu verstehen. Gleiches gilt für die Verbindungen zu den mit der Steuerung verbundenen Komponenten 6, 12, 13, 14, 16, 17, 18 und 19, die hier rein schematisch dargestellt sind. Die tatsächliche Realisierung der Verbindungen und der Steuerung 15 ist nicht auf das vorliegende Ausführungsbeispiel begrenzt, sondern umfasst alle im Kraftfahrzeugbereich üblichen Ausgestaltungen.

Im Folgenden wird anhand der Fig. 3 und 4 ein Startverfahren für die Verbrennungskraftmaschine 3 beschrieben, wie es auch schon weiter oben erläutert wurde.

Die Fig. 3 veranschaulicht in der oberen Hälfte schematisch einen Zylinderdruckverlauf 20 der Verbrennungskraftmaschine 3, wobei auf der Ordinate der Zylinderdruck "P" aufgetragen ist und auf der Abszisse die Motorposition "x". Im unteren Teil veranschaulicht Fig. 3 einen Winkelverlauf 25 zwischen dem Primärschwungrad 4a und dem Sekundärschwungrad 4b, wobei hier auf der Ordinate der Winkel "W" aufgetragen ist und auf der Abszisse die Motorposition "x".

Außerdem ist im Zylinderdruckverlauf 20 ein Druckwert 22 eingezeichnet, der einen Zylinderdruck repräsentiert, der dem Druck ohne Füllungsreduzierung entsprechen würde.

Im Winkelverlauf 25 ist ein Winkelwert 27 eingetragen, der zwischen dem Primärschwungrad 4a und dem Sekundärschwungrad 4b einen Verdrehwinkel von Null Grad entspricht (Ruhelage, Nulllinie).

Schlussendlich symbolisiert in diesem Ausführungsbeispiel eine vertikale Linie 21 einen möglichen Zeitpunkt an dem die Drosselklappe 12 geöffnet wird. Das heißt zu den Zeitpunkten links von der Linie 21 in Fig. 3 ist die Drosselklappe 12 geschlossen und rechts von der Linie 21 ist die Drosselklappe 12 geöffnet.

Das in Fig. 4 schematisch dargestellte Startverfahren 30, das von der Steuerung 15 ausgeführt wird, startet bei 31 damit, dass eine Startanforderung an die Verbrennungskraftmaschine 3 erkannt wird. Wie oben ausgeführt wurde, kann dies das Erkennen verschiedener Ereignisse umfassen, wie Betätigung eines Zündschlüssels (Zündschlosses) oder Startknopfes, Betätigung einer Kupplung, Signal eines Energiemanagementsystems oder weitere Triggersignale zum Starten der Verbrennungskraftmaschine 3, etc.

In Reaktion auf das Erkennen der Startanforderung steuert die Steuerung 15 bei 32 die Drosselklappe 12 derart an, dass sie geschlossen wird (oder teilweise geschlossen wird, wie oben ausgeführt wurde).

Danach steuert die Steuerung 15 den Starter 13 bei 33 derart an, dass er die Verbrennungskraftmaschine 3 für eine vorgegebene Anzahl von Drehungen dreht. Dadurch, dass die Drosselklappe 12 zu diesem Zeitpunkt geschlossen ist, wird der Saugrohrdruck im Saugrohr 11 abgesenkt, was wiederum eine Reduktion der Verbrennungsluftfüllung in den Zylinder 3a-c zur Folge hat. Mit anderen Worten evakuieren durch Drehen der Verbrennungskraftmaschine 3 die Zylinder 3a-c den Ansaugtrakt der Verbrennungskraftmaschine 3, d. h. hier das Saugrohr 11 und den Verbrennungsluftweg bis zur Drosselklappe 12.

Die Verdrehung zwischen dem Primärschwungrad 4a und dem Sekundärschwungrad 4b ist zu diesem Zeitpunkt geringer, wie an den kleinen Schwingungen um die Nulllinie 27 im Winkelverlauf 25 herum erkennbar ist. Durch den Vergleich des Winkelverlaufs der Figuren 1 und 3 ist das Aufschwingen des ZMS vor der Verbrennung und die Anregung durch die Luftfeder sichtbar (in Fig. 1 unten) und die entsprechende Verringerung des Aufschwingens durch die Drosselung (in Fig. 3 unten). Besonders deutlich wird der Unterschied direkt vor der dritten Kompression gekennzeichnet mit E in Fig. 1.

Auf das kleine Maximum 23 im Zylinderdruck folgt ein Peak, der durch entsprechendes Ansteuern der Kraftstoffeinspritzung 14 bei 34 und der damit verbundenen Verbrennung entsteht. Gleichzeitig ist im unteren Teil der Fig. 3 im Winkelverlauf 25 sichtbar, dass die Verdrehung zwischen dem Primärschwungrad 4a und dem Sekundärschwungrad 4b zunimmt.

Als Nächstes steuert die Steuerung 15 bei 34 die Kraftstoffeinspritzung 14 derart an, dass es einen Verbrennungsaussetzer gibt, der sich in einem niedrigen Peak 24 im Zylinderdruckverlauf 20 sichtbar macht. Durch die Füllungsreduzierung liegt der Peak 24 weiterhin unter der Linie 22, welche den Zylinderdruck ohne Füllungsreduzierung darstellt.

Wie oben ausgeführt, sorgt der Verbrennungsaussetzer dafür, dass zusätzlich der Drehzahlgradient der Verbrennungskraftmaschine 3 und der Energieeintrag in das ZMS 4 im Resonanzbereich verringert wird und damit die Winkelreserve (Verdrehwinkel bis es zu einem mechanischen Anschlagen ("Impact") kommt) des ZMS 4 erhöht werden kann.

Danach steuert die Steuerung 15 bei 35 die Drosselklappe 12 so an, dass sie sich öffnet (siehe vertikale Linie 21) und die Kraftstoffeinspritzung 14 wird ebenfalls angesteuert, was sich im Zylinderdruckverlauf 20 durch hohe Peaks nach dem Zeitpunkt 21 zeigt.

Zwar zeigt der Winkelverlauf 25 noch zwei kleinere Maxima 26 nach Öffnen der Drosselklappe 12. Diese sind allerdings viel geringer also es ohne das Startverfahren 30 der Fall wäre, wie ein Vergleich insbesondere mit dem Maximum C in Fig. 1 zeigt. Dementsprechend ist die mechanische Belastung des Zweimassenschwungrads gegenüber der Fig. 1 stark verringert.

Bei 36 beendet die Steuerung 15 dann das Startverfahren 30 und die Verbrennungskraftmaschine ist in ihrem normalen Betriebszustand.

Wie oben erläutert, basiert das Startverfahren 30 bei manchen Ausführungsbeispielen auf weiteren Messwerten, nämlich der Temperatur der Verbrennungskraftmaschine 3, die die Steuerung 15 von dem Temperatursensor 18 erhält, dem Saugrohrdruck, den die Steuerung 15 von dem Saugrohrdrucksensor 17 erhält und dem Umgebungsluftdruck, den die Steuerung von dem Umgebungsdrucksensor 19 erhält. Damit ist bei manchen Ausführungsbeispielen ein sicherer Start der Verbrennungskraftmaschine 3 gewährleistet, wenn bspw. eine hohe Temperatur und/oder ein nieder Umgebungsluftdruck vorliegt, und die Steuerung 15 kann die Reduktion der Verbrennungsluftfüllung über Modulation eines Stellgliedes, bspw. einer Drosselklappe der Zylinder 3a-c entsprechend anpassen.

### Bezugszeichenliste

- A: Zylinderdruckmaximum
- B: Zylinderdruck ohne Verbrennung und ohne Füllungsreduzierung
- C: maximaler verdreh Winkel
- D: Sollwinkel (Nulllage des ZMS)
- E: Verdrehwinkel (ZMS) vor Einsetzen der Verbrennung
- 1: Kraftfahrzeug
- 2: Triebstrang
- 3: Verbrennungskraftmaschine (Dieselmotor)
- 3a-c: Zylinder
- 4: Zweimassenschwungrad (Schwingungsdämpfungsglied)
- 4a: Primärschwungrad
- 4b: Sekundärschwungrad
- 4c: Federelement
- 5: Kupplung
- 6: Getriebe
- 7: Kurbelwelle
- 8: Getriebewelle
- 9: Antriebswelle
- 10a,b: Antriebsräder
- 11: Saugrohr
- 12: Drosselklappe
- 13: Starter
- 14: Kraftstoffeinspritzung
- 15: Steuerung
- 16: Positionssensor der Verbrennungskraftmaschine (Motorpositionssensor)
- 17: Saugrohrdrucksensor
- 18: Temperatursensor der Verbrennungskraftmaschine (Motortemperatursensor)
- 19: Umgebungsdrucksensor
- 20: Zylinderdruckverlauf
- 21: Öffnungszeitpunkt Drosselklappe
- 22: Zylinderdruckmaximum ohne Verbrennung und ohne Füllungsreduzierung
- 23: Niedriges Zylinderdruckmaximum
- 24: Verbrennungsaussetzer
- 25: Winkelverlauf des Zwei-Massen-Schwungrads 4
- 26: Winkelmaxima
- 27: Winkelsollwert
- 30: Startverfahren
- 31: Erkennen einer Startanforderung an die Verbrennungskraftmaschine
- 32: Reduzieren einer Verbrennungsluftfüllung
- 33: Drehen der Verbrennungskraftmaschine
- 34: Kraftstoffzufuhr steuern
- 35: Erhöhen der Verbrennungsluftfüllung
- 36: Beenden des Startvorgangs

## Patentansprüche

1. Startverfahren für einen Dieselmotor (3) eines Triebstrangs (2) eines Kraftfahrzeugs (1), wobei der Dieselmotor (3) wenigstens einen Zylinder (3a-c) aufweist und wobei der Triebstrang (2) den Dieselmotor (3), ein Getriebe (6) und ein Schwingungsdämpfungsglied (4) aufweist, welches zwischen dem Dieselmotor (3) und dem Getriebe (6) gekoppelt ist, wobei das Verfahren umfasst:
Erkennen (31) einer Startanforderung an den Dieselmotor (3);
Reduzieren (32) einer Verbrennungsluftfüllung des wenigstens einen Zylinders (3a-c) des Dieselmotors (3);
Drehen (33) des Dieselmotors (3) für eine vorgegebene Anzahl von Umdrehungen; und
Erhöhen (34) der Verbrennungsluftfüllung des wenigstens einen Zylinders (3a-c) des Dieselmotors (3) wobei, während die Verbrennungsluftfüllung reduziert ist und der Dieselmotor (3) gedreht wird, für einen ersten Arbeitstakt des Dieselmotors (3) Kraftstoff zugeführt wird (34) und für einen darauffolgenden Arbeitstakt des Dieselmotors (3) kein Kraftstoff oder eine geringe Kraftstoffmenge zugeführt wird.

2. Startverfahren nach Anspruch 1, wobei die Reduktion der Verbrennungsluftfüllung von einem Umgebungsluftdruck und/oder einer Betriebstemperatur des Dieselmotors (3) abhängt.

3. Startverfahren nach einem der vorhergehenden Ansprüche, wobei das Erhöhen der Verbrennungsluftfüllung in Abhängigkeit eines Betriebsparameters des Dieselmotors (3) ausgeführt wird, wobei der Betriebsparameter einen Verbrennungsluftdruck im Zylinder, eine Anzahl von Leerkompressionen eines Zylinders und/oder der Anzahl von Umdrehungen des Dieselmotors (3) repräsentiert.

4. Kraftfahrzeug, umfassend:
einen Triebstrang (2), wobei der Triebstrang (2) einen Dieselmotor (3) mit wenigstens einem Zylinder (3a-c), ein Getriebe (6) und ein zwischen dem Dieselmotor (3) und dem Getriebe (6) gekoppeltes Schwingungsdämpfungsglied (4) aufweist,
ein Mittel (12) zum Reduzieren einer Verbrennungsluftfüllung des wenigstens einen Zylinders (3a-c) des Dieselmotors (3);
einen Starter (13) zum Drehen des Dieselmotors (3) für eine vorgegebene Anzahl von Umdrehungen; und
eine Steuerung (15) zum Steuern des Dieselmotors (3), die dazu eingerichtet ist, das Verfahren nach einem der vorhergehenden Ansprüche auszuführen.

5. Kraftfahrzeug nach Anspruch 4, wobei das Mittel zum Reduzieren der Verbrennungsluftfüllung eine Drosselklappe (12), einen variablen Ventilhub, einen variablen Ventiltrieb, einen Unterdruckspeicher und/oder wenigstens ein Auslassventil des wenigstens einen Zylinders aufweist.

6. Kraftfahrzeug nach einem der Ansprüche 4 bis 5, weiter einen Temperatursensor (18) zum Ermitteln einer Betriebstemperatur des Dieselmotors (3) aufweisend.

7. Kraftfahrzeug nach einem der Ansprüche 4 bis 6, weiter einen Umgebungsluftdrucksensor (19), einen Saugrohrdrucksensor (17), und/oder einen Verbrennungskraftmaschinenpositionssensor (16) aufweisend.

## Claims

1. Starting method for a diesel engine (3) of a drive train (2) of a motor vehicle (1), the diesel engine (3) having at least one cylinder (3a-c), and the drive train (2) having the diesel engine (3), a transmission (6) and a vibration damping member (4) which is coupled between the diesel engine (3) and the transmission (6), the method comprising:
detecting (31) of a start request to the diesel engine (3) ;
reducing (32) of a combustion air filling of the at least one cylinder (3a-c) of the diesel engine (3);
turning (33) of the diesel engine (3) for a predetermined number of revolutions; and
increasing (34) of the combustion air filling of the at least one cylinder (3a-c) of the diesel engine (3), fuel being fed in (34) for a first work stroke of the diesel engine (3) while the combustion air filling is reduced and the diesel engine (3) is being turned, and no fuel or a small fuel quantity being fed in for a following work stroke of the diesel engine (3).

2. Starting method according to Claim 1, the reduction of the combustion air filling being dependent on an ambient air pressure and/or an operating temperature of the diesel engine (3).

3. Starting method according to either of the preceding claims, the increasing of the combustion air filling being carried out in a manner which is dependent on an operating parameter of the diesel engine (3), the operating parameter representing a combustion air pressure in the cylinder, a number of empty compressions of a cylinder and/or the number of revolutions of the diesel engine (3).

4. Motor vehicle, comprising:
a drive train (2), the drive train (2) having a diesel engine (3) with at least one cylinder (3a-c), a transmission (6) and a vibration damping member (4) which is coupled between the diesel engine (3) and the transmission (6),
a means (12) for reducing a combustion air filling of the at least one cylinder (3a-c) of the diesel engine (3) ;
a starter (13) for turning the diesel engine (3) for a predetermined number of revolutions; and
a controller (15) for controlling the diesel engine (3), which controller (15) is set up to carry out the method according to one of the preceding claims.

5. Motor vehicle according to Claim 4, the means for reducing the combustion air filling having a throttle valve (12), a variable valve lift means, a variable valve train, a vacuum reservoir and/or at least one outlet valve of the at least one cylinder.

6. Motor vehicle according to either of Claims 4 and 5, having, furthermore, a temperature sensor (18) for determining an operating temperature of the diesel engine (3).

7. Motor vehicle according to one of Claims 4 to 6, having, furthermore, an ambient air pressure sensor (19), an intake manifold pressure sensor (17) and/or an internal combustion engine position sensor (16).

## Revendications

1. Procédé de démarrage pour un moteur diesel (3) d'une chaîne cinématique (2) d'un véhicule automobile (1), dans lequel le moteur diesel (3) présente au moins un cylindre (3a-c) et dans lequel la chaîne cinématique (2) présente le moteur diesel (3), une boîte de vitesses (6) et un organe d'amortissement des vibrations (4), qui est couplé entre le moteur diesel (3) et la boîte de vitesses (6), dans lequel le procédé comprend les étapes suivantes:
détecter (31) une demande de démarrage au moteur diesel (3);
réduire (32) une charge d'air de combustion dudit au moins un cylindre (3a-c) du moteur diesel (3);
faire tourner le moteur diesel (3) d'un nombre prédéterminé de tours; et
augmenter (34) la charge d'air de combustion dudit au moins un cylindre (3a-c) du moteur diesel (3), dans lequel, pendant que la charge d'air de combustion est réduite et que le moteur diesel (3) tourne, on injecte du carburant (34) pour un premier temps de travail du moteur diesel (3) et on n'injecte pas ou peu de carburant pour un temps de travail suivant du moteur diesel (3).

2. Procédé de démarrage selon la revendication 1, dans lequel la réduction de la charge d'air de combustion dépend d'une pression de l'air ambiant et/ou d'une température de fonctionnement du moteur diesel (3) .

3. Procédé de démarrage selon l'une quelconque des revendications précédentes, **caractérisé en ce que** l'on effectue l'augmentation de la charge d'air de combustion en fonction d'un paramètre de fonctionnement du moteur diesel (3), dans lequel le paramètre de fonctionnement représente une pression d'air de combustion dans le cylindre, un nombre de compressions à vide d'un cylindre et/ou le nombre de tours du moteur diesel (3).

4. Véhicule automobile, comprenant:
une chaîne cinématique (2), dans lequel la chaîne cinématique (2) présente un moteur diesel (3) avec au moins un cylindre (3a-c), une boîte de vitesses (6) et un organe d'amortissement des vibrations (4) couplé entre le moteur diesel (3) et la boîte de vitesses (6),
un moyen (12) pour réduire une charge d'air de combustion dudit au moins un cylindre (3a-c) du moteur diesel (3),
un démarreur (13) pour faire tourner le moteur diesel (3) d'un nombre de tours prédéterminé; et
une commande (15) pour commander le moteur diesel (3), qui est conçue pour exécuter le procédé selon l'une quelconque des revendications précédentes.

5. Véhicule automobile selon la revendication 4, dans lequel le moyen pour réduire la charge d'air de combustion présente une vanne à papillon (12), une course de soupape variable, une commande de soupape variable, un réservoir en dépression et/ou au moins une soupape d'échappement dudit au moins un cylindre.

6. Véhicule automobile selon une des revendications 4 à 5, présentant en outre un capteur de température (18) pour déterminer une température de fonctionnement du moteur diesel (3).

7. Véhicule automobile selon l'une quelconque des revendications 4 à 6, présentant en outre un capteur de la pression d'air ambiant (19), un capteur de la pression de la pipe d'aspiration (17), et/ou un détecteur de position de moteur à combustion interne (16) .
